## Europäisches Patentamt
## European Patent Office
## Office européen des brevets

(11) Veröffentlichungsnummer: **0 111 503 B1**

# EUROPÄISCHE PATENTSCHRIFT

(45) Veröffentlichungstag der Patentschrift:
**01.04.87**

(21) Anmeldenummer: **83901700.1**

(22) Anmeldetag: **16.06.83**

(86) Internationale Anmeldenummer:
**PCT/CH 83/00076**

(87) Internationale Veröffentlichungsnummer:
**WO 84/00068 (05.01.84** Gazette **84/1)**

(51) Int. Cl.⁴: **G 01 S 3/78, F 24 J 2/10**

(54) **EINRICHTUNG ZUM AUTOMATISCHEN RICHTEN VON DURCH EINEN REFLEKTOR KONZENTRIERTER SONNENSTRAHLUNG.**

(30) Priorität: **16.06.82 CH 3728/82**

(43) Veröffentlichungstag der Anmeldung:
**27.06.84 Patentblatt 84/26**

(45) Bekanntmachung des Hinweises auf die Patenterteilung:
**01.04.87 Patentblatt 87/14**

(84) Benannte Vertragsstaaten:
**AT DE FR**

(56) Entgegenhaltungen:
**DE - A - 3 047 724**
**FR - A - 2 292 277**
**FR - A - 2 397 625**
**GB - A - 2 054 829**
**US - A - 3 861 379**
**US - A - 4 202 322**

(73) Patentinhaber: **ATLANTIS ENERGIE AG, Thunstrasse 8, CH-3000 Bern 6 (CH)**

(72) Erfinder: **POSNANSKY, Hernán, Melchenbühlweg 18, CH-3006 Bern (CH)**
Erfinder: **POSNANSKY, Mario, Melchenbühlweg 18, CH-3006 Bern (CH)**

(74) Vertreter: **Schweizer, Hans et al, Bovard AG Patentanwälte VSP Optingenstrasse 16, CH-3000 Bern 25 (CH)**

## Beschreibung

Die Erfindung betrifft eine Einrichtung gemäss dem Oberbegriff des Patentanspruches 1 und eine Sonnenenergieanlage gemäss dem Oberbegriff des Patentanspruches 6.

In der US-PS 3 861 379 ist ein Sonnenkollektor beschrieben, der für die Nachlaufsteuerung nach der Sonne eine photoelektrische Anordnung besitzt, die über einen Elektromotor mit einem Verstellmechanismus gekoppelt ist. Eine zweite photoelektrische Anordnung ist vorhanden, damit bei bedecktem Himmel das von der ersten photoelektrischen Anordnung herrührende Drehungssignal für die elektromagnetische Anordnung unterbrochen und auf diese Weise eine Drehung der Reflektoren vermieden wird. Ein am Ende des Tages erregter Zeitschalter sorgt dafür, dass der Motor die Reflektoren in die Morgenstellung zurückkehren lässt. Ein derartiges Sonnenfolgesystem ist kompliziert und dementsprechend teuer.

In der CH-Patentschrift Nr. 627 259 ist ein Sonnenkollektor mit einem sonnenstrahlungsfokussierenden Reflektor beschrieben. Parallel zur Drehachse des Reflektors ist ein länglicher Absorber zum Empfangen der von dem Reflektor konzentrierten Sonnenstrahlung angeordnet. Weiter sind auf die Sonnenstrahlung reagierende und den Verstellmechanismus betätigende Sonnenfolgemittel zum Beibehalten der Fokussierung der Sonnenstrahlung auf den Absorber vorgesehen. Die Sonnenfolgemittel umfassen zwei gegenüber dem Reflektor liegende und, vom Reflektor aus gesehen, sich gegenseitig wenigstens zum grössten Teil auf entgegengesetzte Seiten des Absorbers erstreckende längliche Sensorbehälter. In jedem der Behälter ist ein im Betrieb sich teilweise in der Flüssigkeitsphase und teilweise in der Dampfphase befindliches Arbeitsmedium vorhanden, dessen Dampfdruck durch einen Verdampfungskondensationsprozess der Menge von dem betreffenden Behälter und von den Reflektoren erhaltenen Sonnenstrahlung proportional ist. Die beiden Arbeitsmediumdrükke sind untereinander und im entgegengesetzten Sinne auf den Verstellmechanismus derart wirksam, dass ein bei einer Abweichung der Fokussierung am Absorber auftretender Differenzdruck die Stellung der Reflektoren für die genannte Abweichung korrigiert. Diese bekannten Sonnenfolgemittel sind im Aufbau einfacher als die vorerwähnten Sonnenfolgemittel mit photoelektrischen Anordnungen. Andererseits werden aber Druckleitungen und zwei Kolbenzylinderantriebe benötigt, welche Teile relativ viel Raum beanspruchen, und die Montage dieser Teile ist nicht gerade einfach.

In der FR-A 2 292 277 sind eine Einrichtung und ein Verfahren zum Konzentrieren und Wiedergewinnen von Sonnenenergie beschrieben. Das Dach eines Hauses ist als die Sonnenstrahlung konzentrierender Reflektor ausgebildet. Dieser Reflektor konzentriert die Sonnenstrahlung auf einen Kollektor, der mittels zwei Tragarmen über dem Dach gehalten wird. Die einen Enden der Tragarme sind um eine wenigstens angenähert zum Dachfirst parallel verlaufende und unterhalb der Dachoberfläche angeordnete Achse schwenkbar gelagert. Ein Elektromotor dient zum Verstellen der Winkelstellung der Tragarme und damit zum Verschwenken des Kollektors, so dass die durch das als Reflektor ausgebildete Dach konzentrierte Sonnenstrahlung auf den Kollektor auftrifft. Weil sich die durch das ortsfeste Dach konzentrierte Sonnenstrahlung entsprechend der scheinbaren Bewegungsbahn der Sonne verschiebt, ist eine Nachführvorrichtung vorgesehen, die den Elektromotor so steuert, dass der Kollektor automatisch so verschwenkt wird, dass die konzentrierte Sonnenstrahlung immer auf den Kollektor auftrifft. Die genannte Nachführvorrichtung umfasst zwei Anordnungen von in Reihe geschalteten photoelektrischen Zellen, die bezüglich der Mittellinie der zur Bestrahlung mit der konzentrierten Sonnenstrahlung bestimmten Seitenfläche des Kollektors symmetrisch so angeordnet sind, das beide Anordnungen gleich stark bestrahlt werden, wenn praktisch die ganze konzentrierte Sonnenstrahlung auf den Kollektor auftrifft. Die beiden Anordnungen von photoelektrischen Zellen erzeugen in Abhängigkeit der auf sie auftreffenden Sonnenstrahlung elektrische Signale, die einem Differenzverstärker zugeführt werden. Das Ausgangssignal des Differenzverstärkers wird in einem Verstärker verstärkt und einer Relaisschaltung zugeführt. Die Relaisschaltung bewirkt, dass eine Spannungsquelle so an dem Elektromotor an- oder abgeschaltet wird, damit der Kollektor automatisch so verschwenkt wird, dass er während der ganzen Sonnenscheindauer voll mit der konzentrierten Sonnenstrahlung bestrahlt wird. Nebst der Spannungsquelle für den Elektromotor ist eine weitere Spannungsquelle zur Speisung der genannten Verstärker und der Relaisschaltung notwendig. Die relativ komplizierte Dachführvorrichtung und die Spannungsquellen erfordern grössere Unterhaltsarbeiten, was nachteilig und finanziell aufwendig ist.

Es ist Aufgabe der Erfindung, eine Sonnenenergieanlage der eingangs genannten Art zu schaffen, welcher die genannten Nachteile nicht anhaften.

Die erfindungsgemässe Sonnenenergieanlage ist gekennzeichnet durch die im kennzeichnenden Teil des Patentanspruches 1 angeführten Merkmale.

Die Erfindung ist nachstehend mit Bezugnahme auf die Zeichnung beispielsweise näher erläutert. Es zeigen:

Fig. 1 eine Sonnenenergieanlage mit einem Reflektor, einem Absorber und einem Ausführungsbeispiel der erfindungsgemässen Einrichtung in vereinfachter schaubildlicher Darstellung,

Fig. 2 eine andere Sonnenenergieanlage mit einem aus streifenförmigen Reflektorelementen zusammengesetzten Reflektor, einem Absorber und einem anderen Ausführungsbeispiel der erfindungsgemässen Einrichtung in vereinfachter schaubildlicher Darstellung,

Fig. 3 das Prinzipschema einer ersten einfachen Ausführungsform der erfindungsgemässen Einrichtung,

Fig. 4 das Prinzipschema einer zweiten Ausführungsform der erfindungsgemässen Einrichtung, und

Fig. 5 das Prinzipschema eines dritten Ausführungsbeispieles der erfindungsgemässen Einrichtung.

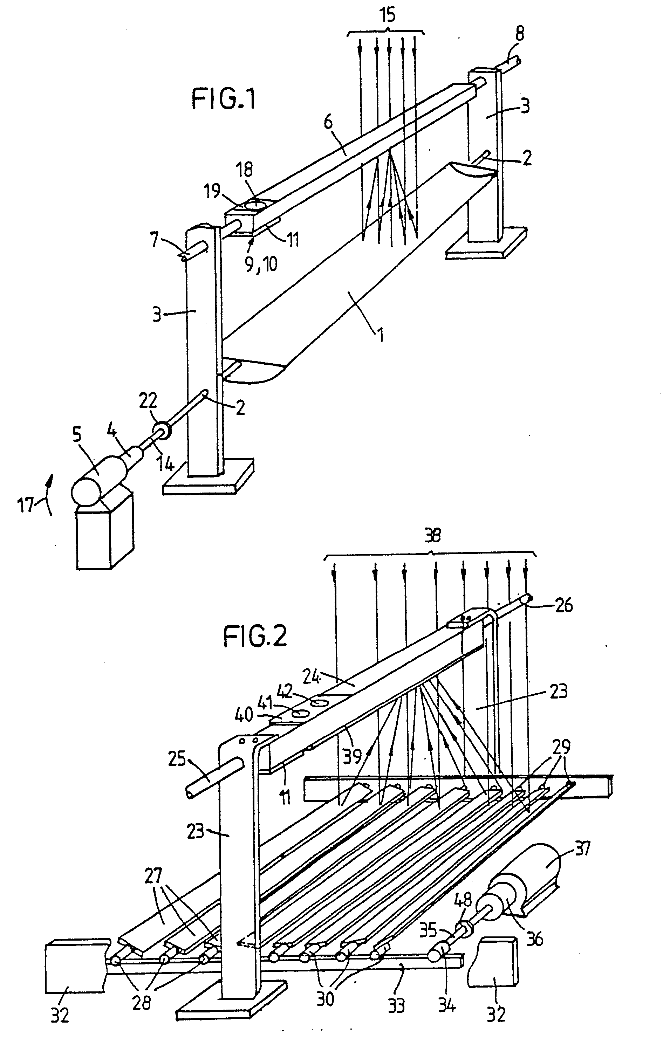

Die Fig. 1 zeigt eine Sonnenenergieanlage mit einem wenigstens angenähert zylindrisch parabolischen Reflektor 1, der um eine Schwenkachse 2 drehbar ist. Die Schwenkachse 2 ist in vertikal angeordneten Stützen 3 gelagert und über ein Reduktionsgetriebe 4 mit einem Elektromotor 5 drehverbunden. Im Bereich der oberen Enden der Stützen 3 ist ein Absorber 6 starr angeordnet. Der Absorber 6 ist ein länglicher Behälter, vorzugsweise aus einem Metall. Die Aussenseiten des Behälters sind schwarz, so dass ein möglichst grosser Anteil der auf ihn auftreffenden Sonnenenergie in Wärme umgesetzt wird. An jeder der Stirnseiten des Behälters 6 ist je eine Rohrleitung 7 bzw. 8 vorgesehen, über welche ein Wärmeträger, beispielsweise Wasser, dem Behälter zugeführt bzw. aus dem Behälter abgeführt wird. Weil der den Absorber 6 bildende Behälter starr angeordnet ist, können die Rohrleitungen ebenfalls starr verlegt werden.

Der Abstand zwischen dem Reflektor 1 und dem Absorber 6 ist so gewählt, dass die Sonnenenergie auf der Unterseite des Absorbers 6 nicht längs einer scharfen Brennlinie konzentriert wird, sondern dass sich ein länglicher Brennfleck ergibt, dessen Breite kleiner ist als die Breite der Unterseite des Absorbers 6.

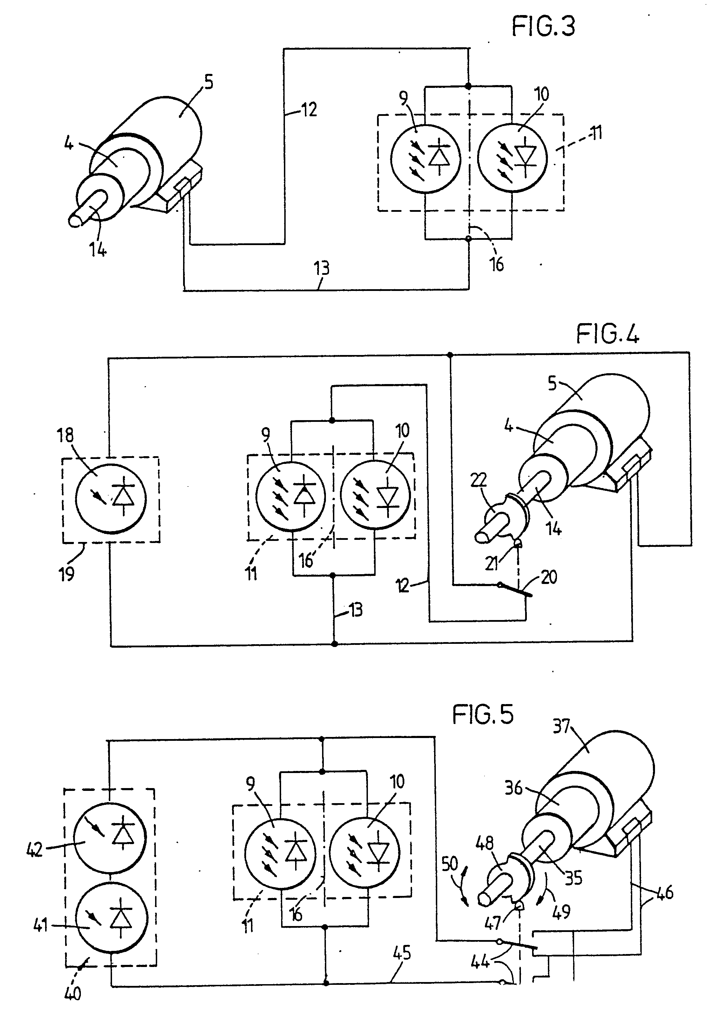

Die einfachste Ausführungsform der erfindungsgemässen Einrichtung umfasst nebst dem Elektromotor 5 zwei Solarzellen 9 und 10, die an einer dem Reflektor 1 zugewandten Stelle des Absorbers 6, d.h. an der Unterseite des Absorbers 6, beidseitig der Längsmittellinie der Unterseite, angeordnet sind. Diese beiden Solarzellen sind in der Fig. 1 nicht direkt sichtbar, sondern nur durch den Pfeil 9, 10 angedeutet. Die Fig. 3 zeigt auf welche Weise die beiden Solarzellen 9 und 10 mit dem Elektromotor 5 verbunden sind. Die beiden Solarzellen 9 und 10 können vorzugsweise auf einem Träger 11 angeordnet sein, wobei die Solarzellen 9 und 10 über den Träger 11 in wärmeleitender Verbindung mit dem Absorber 6 stehen können.

Die Solarzellen 9 und 10 sind entgegengesetzt zueinander parallel geschaltet, d.h., sie sind so geschaltet, dass sie bei auftreffender Sonnenstrahlung je eine Spannung mit zueinander entgegengesetzten Polaritäten erzeugen. Die einen der miteinander verbundenen Anschlüsse der Solarzellen 9 und 10 sind über einen Leiter 12 mit dem einen Anschluss und die anderen Anschlüsse der Polarzellen 9 und 10 sind über einen Leiter 13 mit dem anderen Anschluss des Elektromotors 5 verbunden.

Der Elektromotor 5 ist ein Gleichstrommotor mit einem kleinen Innenwiderstand, damit er durch die von den Solarzellen 9 und 10 abgegebene Spannung ein genügendes Drehmoment erzeugt, um den Reflektor 1 zu verschwenken. Wenn die optische Achse des Reflektors 1 gegenüber der Sonne ausgerichtet ist, so werden die einfallenden Sonnenstrahlen, in der Fig. 1 durch die Pfeile 15 angedeutet, auf den Flächenbereich, der der Unterseite des Absorbers 6 entspricht, konzentriert. In diesem Falle trifft auf jede der beiden Solarzellen 9 und 10, wenn sie symmetrisch gegenüber der in der Fig. 3 durch die strichpunktierte Linie 16 dargestellte Längsmittellinie der Unterseite des Absorbers 6 angeordnet sind, die gleiche Lichtmenge pro Zeiteinheit auf. Deshalb erzeugen sie angenähert gleich grosse Spannungen, die jedoch einander entgegengesetzt sind, so dass an den Anschlüssen des Elektromotors 5 eine Differenzspannung auftritt.

Durch die scheinbare Bewegung der Sonne bezogen auf die Fig. 1, beispielsweise nach rechts, wandert der auf der Unterseite des Absorbers fokussierte Brennfleck in Richtung des linken Randbereiches der Unterseite des Absorbers 6. Dies bewirkt, dass auf die Solarzelle 10 eine kleinere Lichtmenge pro Zeiteinheit auftrifft als auf die Solarzelle 9. Die Solarzelle 9 erzeugt somit eine grössere Spannung als die Solarzelle 10. Die auftretende Differenzspannung hat zur Folge, dass der Elektromotor 5 den Reflektor in Richtung des Pfeiles 17 verschwenkt. Auf diese Weise folgt der Reflektor 1 automatisch der sich scheinbar bewegenden Sonne, wobei der Brennfleck andauernd auf die Unterseite des Absorbers 6 fokussiert ist.

Die oben beschriebene einfache Ausführung der erfindungsgemässen Einrichtung funktioniert einwandfrei solange der Brennfleck wenigstens teilweise auf eine der Solarzellen 9 oder 10 auftrifft. Wenn beispielsweise während des Tages eine zeitlich länger dauernde Bewölkung auftritt, so bleibt der Reflektor 1 stehen, weil beide Solarzellen 9 und 10 nicht bestrahlt werden. Hält die Bewölkung länger an, so dass bei erneutem Sonnenschein der Brennfleck über die Solarzelle 9 hinausgewandert ist, so wird keine Differenzspannung mehr an den Elektromotor 5 abgegeben und der Reflektor 1 bewegt sich nicht. Eine ähnliche Situation tritt auf, wenn der Reflektor 1 vor bzw. nach dem Sonnenuntergang gegen Westen gerichtet ist und am anderen Morgen die Sonne im Osten aufgeht.

Bei diesem einfachen Ausführungsbeispiel ist es notwendig, den Reflektor 1 von Hand oder mit andern Mitteln soweit zu verstellen, dass der Brennfleck wenigstens teilweise auf eine der beiden Solarzellen 9 bzw. 10 auftrifft.

Um diesem Nachteil zu begegnen kann beispielsweise der Träger 11 beidseits der Längsmittelachse 16 der Unterseite des Absorbers 6 verlängert werden, weil dies in der Fig. 1 strichpunktiert dargestellt ist. Auf der Unterseite des verlängerten Trägers 11' sind nicht nur die beiden genannten Solarzellen 9 und 100, sondern noch zusätzliche nicht dargestellte Solarzellen angeordnet, wobei die am bezogen auf die Fig. 1 linken Teil des verlängerten Trägers 11' angeordneten Solarzellen mit der Solarzelle 9 und die am rechten Teil des verlängerten Trägers 11' angeordneten Solarzellen mit der Solarzelle 10 parallel geschaltet sind. Die Länge des Trägers 11' und die Anzahl der zusätzlichen Solarzellen sind so gewählt, dass der Brennfleck in jeder im normalen Betriebszustand der Anlage vorkommenden Stellung des Reflektors 1 der Brennfleck auf eine der am Träger 11' angeordneten Solarzellen auftrifft.

Der Vorteil dieser modifizierten Ausführung ist, dass im Stromkreis keine Schaltmittel benötigt werden. Andererseits sind aber allein für die Nachlaufsteuerung eine Mehrzahl von relativ teuren Solarzellen notwendig.

Eine ähnliche Wirkung wie mit dem oben beschriebenen verlängerten Träger 11' und der Anzahl der zusätzlichen Solarzellen kann mit Hilfe der in der Fig. 4 dargestellten Schaltung mit lediglich einer weiteren Solarzelle 18 erzielt werden. Diese Schaltung wird nachstehend mit Bezug auf die Fig. 1 näher beschrieben.

Die weitere Solarzelle 18 ist direkt mit den Anschlüssen des Elektromotors 5 verbunden und kann an irgend einer Stelle starr angeordnet werden, an welcher sie den ganzen Tag nichtkonzentrierte Sonnenstrahlung empfangen kann. Vorzugsweise ist die weitere Solarzelle 18 auf der Oberseite des Absorbers 6 angeordnet und wärmeleitend mit demselben verbunden, so dass die weitere Solarzelle 18 durch den Wärmeträger gekühlt wird. In vorteilhafter Weise ist die Solarzelle 18 auf einem wärmeleitenden Träger 19 angeordnet, der auf der Oberseite des Absorbers befestigt ist.

Die weitere Solarzelle ist wie schon erwähnt direkt mit den Anschlüssen des Elektromotors verbunden. Der Leiter 12 der aus den Solarzellen 9 und 10 gebildeten Parallelschaltung ist über ein Schaltmittel, z.B. ein Schalter 20, mit der Wicklung des Elektromotors 5 verbunden. Der Schalter 20 besitzt ein Betätigungsorgan 21, welches mit einem drehfest auf die Ausgangswelle 14 des Reduktionsgetriebes 4 aufgesetzten Nocken 22 zusammenwirkt. Der Schalter 20 ist in der Fig. 1 nicht dargestellt.

Der Nocken 22 ist so ausgebildet und auf die Ausgangswelle 14 aufgesetzt, dass er den Schalter 20 in der in der Fig. 4 dargestellten Stellung hält, solange der Reflektor 1 eine Stellung einnimmt, die sich zwischen der Morgenstellung und der Abendstellung befindet. Die Schaltflanken des Nockens 22 sind so ausgebildet, dass kurz bevor die optische Achse des Reflektors 1 sowohl in der Abendstellung als auch in der Morgenstellung gegen den jeweiligen Horizont gerichtet ist, der Schalter 20 durch den Nocken 22 geöffnet wird. Weil die Sonnenstrahlung gegen Abend abnimmt und nicht mehr genügend oder keine Energie zum Antrieb der Nachlaufsteuerung vorhanden ist, bleibt der Elektromotor 5 und somit auch der Reflektor 1 in der Abendstellung stehen. Wenn am anderen Tag die Sonne erneut scheint, so wird die weitere Solarzelle 18 bestrahlt und der Elektromotor 5 bewegt den Reflektor 1 weiter in der gleichen Drehrichtung wie am Tag zuvor, wobei der Schalter 20 geöffnet wird und der Reflektor 1 weiter in derselben Richtung gedreht wird, bis er seine Morgenstellung erreicht. Kurz zuvor wird der Schalter 20 wieder geschlossen. Nachdem der Brennfleck über die Solarzelle 9 bis zur Solarzelle 10 gewandert ist, erzeugt die letztere eine Gegenspannung zu der von der Solarzelle 9 und 18 erzeugten Spannung. Wenn die Differenz klein oder Null ist, bleibt der Elektromotor 5 und somit der Reflektor 1 stehen, bzw. er wird durch die durch die scheinbare Bewegung der Sonne auftretende Differenzspannung automatisch zur Sonne gerichtet, in der Weise, dass der Brennfleck automatisch auf die Unterseite des Absorbers 6 fokussiert wird.

Tritt während des Tages eine Bewölkung auf, wodurch der Elektromotor 5 stillsteht, weil keine der Solarzellen 9, 10 oder 18 eine zum Betrieb des Elektromotors 5 ausreichende Spannung abgibt, so verbleibt auch der Reflektor 1 in der kurz vor Bewölkungsauftritt eingenommenen Stellung. Dauert die Bewölkung nur kurz an, so wird noch ein Teil des Brennfleckes auf die Solarzelle 9 auftreffen und der Elektromotor 5 führt den Reflektor 1 dem neuen Sonnenstand nach. Dauert die Bewölkung jedoch so lange, bis bei erneutem Sonnenschein der Brennfleck bereits über die Solarzelle 9 hinausgewandert ist, so wird lediglich die weitere Solarzelle 18 der nichtkonzentrierten Sonnenstrahlung ausgesetzt. Die dabei durch sie erzeugte Spannung bewirkt, dass der Elektromotor 5 den Reflektor 1 nachführt, bis der Brennfleck wieder vollständig auf die Unterseite des Absorbers auftrifft.

Dieses Ausführungsbeispiel der erfindungsgemässen Einrichtung kann nur für Reflektoren verwendet werden, die um mehr als 360° drehbar sind.

Die Fig. 2 zeigt eine andere Ausführungsform einer Sonnenenergieanlage mit einem weiteren Ausführungsbeispiel der erfindungsgemässen Einrichtung. An den oberen Endbereichen von zwei im Boden fest verankerten Stützen 23 sind die Enden eines Absorbers 24 starr befestigt. Am einen Ende des Absorbers 24 ist eine Bohrleitung 25 zum Zuführen eines flüssigen Wärmeträgers, z.B. Wasser, und am anderen Ende des Absorbers 24 ist eine Rohrleitung 26 zum Abführen des Wärmeträgers aus dem Absorber 24 angeordnet. Der Reflektor wird durch eine Anzahl streifenförmige, um ihre Längsachse schwenkbare Reflektorelemente 27 gebildet. Über jede Endstirnseite der Reflektorelemente ragt je ein Lagerzapfen 28 bzw. 29 vor, wobei zwischen dem äusseren Ende der Lagerzapfen 28 und der zugehörigen Endstirnseite je ein Ritzel 30 angeordnet ist. Die Lagerzapfen 29 sind in längs einer Geraden in einem Querbalken 31 angebrachten Lagern gelagert und die Lagerzapfen 28 sind auf ähnliche Weise in einem Lagerbalken 32 gelagert, von dem jedoch nur die beiden Endbereiche sichtbar sind. Jedes der Ritzel 30 kämmt mit einer in ihrer Längsrichtung verschiebbaren Zahnstange 33. In die Verzahnung der Zahnstange 33 greift weiter ein Ritzel 34 ein, das mit einer Antriebswelle 35 eines Reduktionsgetriebes 36 drehverbunden ist. Das Reduktionsgetriebe 36 wird durch einen Elektromotor 37 angetrieben.

Die einzelnen vorzugsweise ebenen reflektierenden Flächenbereiche jedes Reflektorelementes 27 schliessen mit der durch die Reihenanordnung der Lagerzapfen 28 und 29 definierten Ebene einen anderen Winkel ein. Dadurch wird erreicht, dass die beispielsweise durch Pfeile 38 angedeutete Sonnenstrahlung auf die Unterseite des Absorbers 24 reflektiert wird. Damit der Brennfleck auch bei der scheinbaren Bewegung der Sonne immer auf die Unterseite des Reflektors 24 fokussiert wird, werden entsprechend der scheinbaren Sonnenbewegung die Reflektoren durch den Elektromotor 37, das Ritzel 34, die Zahnstangen 33 und die Ritzel 30 um den gleichen Winkel geschwenkt.

Der Absorber 24 ist ein sog. Hybride-Absorber, der einen Behälter für den Durchfluss des Wärmeträgers und einen mit einer nicht dargestellten Solarzellenanordnung bestückten Träger 39 umfasst. Die Solarzellenanordnung ist wärmeleitend mit der Unterseite des Behälters des Absorbers 24 verbunden. Weiter sind die weiter oben erwähnten Solarzellen 9 und 10 der erfindungsgemässen Einrichtung über ihren Träger 11 auf der Unterseite des Absorbers 24 wärmeleitend befestigt. Auf der Oberseite des Absorbers 24 ist ein Träger 40 mit zwei weiteren Solarzellen 41 und 42 angeordnet. Die Solarzellen 41 und 42 sind im Gegensatz zu den Solarzellen 9 und 10 sowie der Solarzellenanordnung nicht der konzentrierten Sonnenstrahlung, sondern der unkonzentrierten Sonnenstrahlung ausgesetzt.

Gemäss dem Schaltschema nach der Fig. 5 sind die beiden weiteren Solarzellen 41 und 42 in Serie geschaltet, und diese Serieschaltung ist parallel zur aus den Solarzellen 9 und 10 gebildeten Parallelschaltung geschaltet. Die Serieschaltung der weiteren Solarzellen 41 und 42 ist so mit den parallel geschalteten Solarzellen 9 und 10 verbunden, dass die Solarzellen 41 und 42 eine Spannung mit gleicher Polarität erzeugen wie die Solarzelle 9. Die einen Anschlüsse der Solarzellen 9, 10 und 42 sind über einen Leiter 43 an ein Umschaltmittel, z.B. an einen doppelpoligen Umschalter 44, angeschlossen. Die anderen Anschlüsse der Solarzellen 9, 10 und 41 sind über einen Leiter 45 an den Umschalter 44 angeschlossen. Die andere Seite des Umschalters 44 ist über Leiter 46 mit den Anschlüssen des Elektromotors 37 verbunden. Der Umschalter 44 besitzt ein Betätigungsorgan 47, das mit einem auf der Ausgangswelle 35 des Reduktionsgetriebes 36 befestigten Nocken 48 zusammenwirkt. Der Umschalter 44 ist in der Fig. 2 nicht dargestellt.

Der Nocken 48 ist so ausgebildet und auf der Ausgangswelle 35 befestigt, dass sich der Umschalter 44 in der in der Fig. 5 dargestellten Stellung befindet, während die optische Achse des aus den Reflektorelementen 27 gebildeten Reflektors von der Morgenstellung in die Abendstellung bewegt. Die Schaltflanken des Nockens 48 sind so angeordnet, dass der Umschalter 44 in die nicht dargestellte Stellung bewegt wird, wenn die optische Achse des genannten Reflektors den betreffenden Horizont erreicht.

Die in der Fig. 5 gezeigte Stellung des Nockens 48 bezüglich des Betätigungsorganes 47 entspricht der Morgenstellung des Reflektors 27. Die eintreffenden Morgensonnenstrahlen werden auf die Solarzellen 9 und 10 fokussiert. Mit der sich scheinbar bewegenden Sonne wird der Reflektor 27 schrittweise automatisch entsprechend der auftretenden Differenzspannung geschwenkt, so dass die Sonnenstrahlen während des ganzen Tages auf die Unterseite des Absorbers 24 bzw. auf die Solarzellenanordnung auf dem Träger 39 fokussiert werden. Dabei wird von der Solarzellenanordnung elektrische Energie an einen Verbraucher abgegeben und der Wärmeträger erwärmt.

Wenn gegen den Abend die durch die schwächere Sonnenstrahlung in den Solarzellen 9 und 10 bzw. 41 und 42 erzeugte Energie nicht mehr ausreicht, um den Elektromotor 37 anzutreiben, so stehen dieser und die Reflektorelemente 27 still. Tagsüber hat sich die Antriebswelle 35 in Richtung des Pfeiles 49 gedreht. Am nächsten Morgen treffen die Sonnenstrahlen nur auf die Solarzellen 41 und 42 auf, weil sich der Reflektor noch in der Abendstellung befindet. Wenn die auf die Solarzellen 41 und 42 einfallende unkonzentrierte Strahlung ausreichend gross ist, dreht der Motor 37 die Ausgangswelle 49 vorerst in der gleichen Richtung weiter, wie dies durch den Pfeil 49 angezeigt ist und zwar so weit, bis der Umschalter 44 durch den Nocken 48 in die in der Fig. 5 nicht dargestellte Stellung verbracht wird. Durch die Betätigung des Umschalters 44 wird die Polarität der dem Elektromotor 37 zugeführten Spannung gewechselt und somit dreht der Elektromotor 37 in der entgegengesetzten Richtung weiter, siehe Pfeil 50. Der Umschalter 44 ist so ausgebildet, dass er in der neu eingenommenen Stellung verbleibt, bis die andere Schaltflanke des Nockens 48 das Betätigungsorgan 47 betätigt. Dies ist der Fall, wenn der Elektromotor 37 die Antriebswelle 35 um einen Winkel gedreht hat, bis die Spiegelelemente 27 ihre Morgenausgangsstellung erreicht haben. Nach der erneuten Betätigung des Betätigungsorganes 47 stellt der Umschalter 44 in seine in der Fig. 5 dargestellte Lage zurück und die Polarität der von den Solarzellen 41 und 42 erzeugten Spannung wird wiederum gewechselt, und der Elektromotor 37 dreht wieder in der ursprünglichen Richtung gemäss dem Pfeil 49 weiter. Das Weiterdrehen dauert so lange an, bis die eintreffende Sonnenstrahlung auf die Solarzellen 9 und 10 fokussiert wird.

Tritt während des Tages eine starke Bewölkung auf, so dass die in den Solarzellen 9 und 10 erzeugte elektrische Spannung nicht mehr ausreicht, um den Elektromotor 37 anzutreiben, so stehen derselbe und somit auch alle Reflektorenelemente 27 still. Wenn nach relativ kurzer Zeit die Sonne wieder scheint, so trifft zumindest ein Teil des Brennfleckes auf die Solarzelle 9 auf und die in ihr erzeugte Spannung sorgt dafür, dass der Elektromotor 37 die Reflektorenelemente 27 nachführt, damit der Brennfleck wieder auf die Unterseite des Absorbers 24 bzw. auf die Solarzellenanordnung auf dem Träger 39 auftrifft. Hält die Bewölkung längere Zeit an, so dass bei erneutem Sonnenschein der Brennfleck ausserhalb der Unterseite des Absorbers 24 gelangt ist, so wird dennoch in den weiteren Solarzellen 41 und 42, die nur durch unkonzentrierte Sonnenstrahlung bestrahlt werden, eine Spannung erzeugt, die den Elektromotor 37 antreibt, um die Ausgangswelle 35 in der durch den Pfeil 49 angegebenen Richtung zu drehen, bis die Sonnenstrahlen wieder auf die Unterseite des Absorbers 24 fokussiert werden. Um eine sichere Rückkehr der Reflektorelemente 27 von ihrer Abendstellung in ihre Morgenstellung zu gewährleisten, wird vorzugsweise dem Umschalter 44 noch ein ebenfalls durch das Betätigungsglied 47 betätigbarer Schalter an der mit 51 bezeichneten Stelle zugeschaltet. Dieser Schalter ist geschlossen, wenn sich der Umschalter 44 in der in der Fig. 5 dargestellten Stellung befindet und geöffnet, wenn sich der Umschalter 44 in der in der Figur nicht dargestellten Stellung befindet. Dieser zusätzliche Schalter garantiert, dass der Rücklauf von der Abendstellung in die Morgenstellung durch die in der Solarzelle 10 allfällig erzeugte Spannung nicht gestört wird.

Das zuletzt beschriebene Ausführungsbeispiel der erfindungsgemässen Einrichtung ist insbesondere geeignet für die Nachlaufsteuerung eines Reflektors, welcher nicht um volle 180° drehbar ist.

**Patentansprüche**

1. Sonnenenergieanlage mit einem ortsfesten Kollektor (6), einem um eine Schwenkachse verstellbaren Reflektor (1) zum Konzentrieren der Sonnenstrahlung, einer Einrichtung mit einem Verstellantrieb (4, 14) zum automatischen Richten der durch den Reflektor (1) konzentrierten Sonnenstrahlung auf den Kollektor (6), mit einem Elektromotor (5) zum Antreiben des Verstellantriebes (4, 14) des Reflektors (1) und wenigstens zwei an der dem Reflektor (1) zugewandten Seite des Kollektors (6) befestigten Solarzellen (9, 10), dadurch gekennzeichnet, dass die Solarzellen (9, 10) derart parallel geschaltet sind, dass bei Bestrahlung der Solarzellen (9, 10) mit konzentrierter Sonnenstrahlung die erzeugten elektrischen Spannungen einander entgegenwirken, dass die genannte Parallelschaltung zum direkten Antreiben des Elektromotors (5) mit der Wicklung desselben verbunden ist, dass mindestens eine weitere unkonzentrierter Sonnenstrahlung ausgesetzte Solarzelle (41; 18) vorgesehen ist, die entweder parallel zur genannten Parallelschaltung geschaltet oder direkt mit der Wicklung des Elektromotors verbunden ist, und dass die parallel geschalteten Solarzellen (9, 10) etwa in einer zur Schwenkachse des Reflektors (1) parallelen Ebene liegend so am Kollektor (6) angeordnet sind, dass im Betriebszustand der Anlage ein Teil der konzentrierten Sonnenstrahlung auf die eine und/oder andere der parallel geschalteten Solarzellen auftrifft.

2. Anlage nach Anspruch 1, dadurch gekennzeichnet, dass die Wicklung des Elektromotors (37) über ein doppelpoliges Umschaltmittel (44) mit der genannten Parallelschaltung (9, 10) verbunden ist, und dass das Umschaltmittel ein Betätigungsorgan zum Abtasten der Stellung des Reflektors (1) aufweist.

3. Anlage nach Anspruch 1, dadurch gekennzeichnet, dass die Wicklung des Elektromotors (5) über ein Schaltmittel (20) mit der genannten Parallelschaltung (9, 10) verbunden ist, und dass das Schaltmittel ein Betätigungsorgan (21) zum Abtasten der Stellung des Reflektors (1) aufweist.

4. Anlage nach Anspruch 1, dadurch gekennzeichnet, dass die weitere Solarzelle (18) an der im Betriebszustand der Sonne zugewendeten Seite des Kollektors (6) angeordnet ist.

5. Anlage nach Anspruch 3, dadurch gekennzeichnet, dass zur weiteren Solarzelle (41) eine zusätzliche Solarzelle (42) in Reihe geschaltet ist.

6. Anlage nach einem der Ansprüche 1 bis 5, dadurch gekennzeichnet, dass der Kollektor ein länglicher Behälter (6) zum Durchleiten eines flüssigen Wärmeträgers ist.

7. Anlage nach Anspruch 6, dadurch gekennzeichnet, dass auf der dem Reflektor (27) zugewandten Seite des Behälters eine Solarzellenanordnung zum Liefern von elektrischer Energie angeordnet ist, wobei der Wärmeträger zur Kühlung der Mehrzahl der Solarzellen dient.

**Claims**

1. A solar power plant with a stationary collector (6), a reflector (1) adjustable around a swivel axis for focusing the solar radiation, an apparatus with an adjusting mechanism (4, 14) for automatically directing the solar radiation focused by the reflector (1) onto the collector (6) having an electric motor (5) for driving the ajdusting mechanism (4, 14) of the reflector (1) and at least two solar cells (9, 10) fixed on the side of the collector (6) facing the reflector (1) characterized in that the solar cells (9, 10) are connected in parallel in such a way that upon irradiation of the solar cells (4, 14) with focused solar radiation the electric voltages generated counteract one another, that the said parallel connection for the direct driving of the electric motor (5) is connected to the winding of same, that at least one further solar cell (41; 18) irradiated by unfocused solar radiation is provided which is either connected in parallel to the said parallel connection or directly to the winding of the electric motor and that the parallel connected solar cells (9, 10) situated to some extent in a plane parallel to the swivel axis of the reflector (1) are arranged on the collector (6) in such a way that when the plant is in operation a part of the focused solar radiation impinges upon one and/or the other of the parallel connected solar cells.

2. A plant according to claim 1 characterized in that the winding of the electric motor (37) is connected via a doublepole switch means (44) to the said parallel connection (9, 10) and that the switch comprises an actuating member for determining the position of the reflector (1).

3. A plant according to claim 1 characterized in that the winding of the electric motor (5) is connected via a switching means (20) to the said parallel connection (9, 10) and that the switching means comprises an actuating member (21) for determining the position of the reflector (1).

4. A plant according to claim 1 characterized in that the further solar cell (18) is arranged on the side of the collector (6) facing the sun when in operation.

5. A plant according to claim 3 characterized in that an additional solar cell (42) is connected in series to the further solar cell (41).

6. A plant according to one of the claims 1 to 5 characterized in that the collector is an elongated receptacle (6) for the conveyance therethrough of a liquid heat carrier.

7. A plant according to claim 6 characterized in that a solar cell arrangement for supplying electric energy is arranged on the side of the receptacle facing the reflector (27) thereby the heat carrier serves for cooling the majority of the solar cells.

## Revendications

1. Installation d'énergie solaire avec un collecteur (6) fixe, un réflecteur (1) orientable autour d'un axe de pivotement pour la concentration du rayonnement solaire, une installation avec un entraînement réglable (4, 14) pour diriger automatiquement le rayonnement solaire concentré au moyen du réflecteur (1) sur le collecteur (6), avec un moteur électrique (5) pour la mise en action de l'entraînement réglable (4, 14) du réflecteur (1) et au moins deux cellules solaires (9, 10) fixées sur la face du collecteur (6) qui se trouve en regard du réflecteur (1), caractérisée en ce que les cellules solaires (9, 10) sont branchées en parallèle de telle manière que les tensions électriques produites lors de l'irradiation des cellules solaires (9, 10) avec le rayonnement solaire concentré, s'opposent l'une contre l'autre, en ce que ledit branchement parallèle est relié au bobinage du moteur électrique (5) pour l'entraînement direct de celui-ci, en ce que au moins une autre cellule solaire (41; 18) exposée à un rayonnement solaire diffus est prévue, qui n'est ni branchée en parallèle audit branchement parallèle, ni reliée directement au bobinage du moteur électrique, et en ce que les cellules solaires branchées en parallèle, situées dans un plan approximativement parallèle à l'axe du pivotement du réflecteur (1), sont disposées sur le collecteur (6) de telle façon que lorsque l'installation est en service, une partie du rayonnement solaire se produit sur l'une et/ou l'autre des cellules solaires branchées en parallèle.

2. Installation selon la revendication 1, caractérisée en ce que le bobinage du moteur électrique (37) est relié avec ledit branchement en parallèle (9, 10) via un moyen (44) de commutation bipolaire, et en ce que le moyen de commutation présente un organe de commande pour la détection de la position du réflecteur (1).

3. Installation selon la revendication 1, caractérisée en ce que le bobinage du moteur électrique (5) est relié audit branchement en parallèle (9, 10) via un dispositif de commutation (20), et en ce que le dispositif de commutation présente un organe de commande (21) pour la détection de la position du réflecteur (1).

4. Installation selon la revendication 1, caractérisée en ce que l'autre cellule solaire (18) est disposée sur celle des faces du collecteur (6) qui est exposée au soleil lors du fonctionnement.

5. Installation selon la revendication 3, caractérisée en ce que une cellule solaire (42) supplémentaire est branchée en série avec l'autre cellule solaire (41).

6. Installation selon les revendications 1 à 5, caractérisée en ce que le collecteur est un bac (6) allongé pour la circulation d'un liquide caloporteur.

7. Installation selon la revendication 6, caractérisée en ce que un agencement de cellules solaires est disposé sur la face du bac se trouvant en regard du réflecteur (27) pour la fourniture d'énergie électrique, le liquide caloporteur servant au refroidissement de la pluralité des cellules solaires.

0 111 503

FIG.1

FIG.2

9

FIG.3

FIG.4

FIG.5